# EUROPEAN PATENT SPECIFICATION

(11) **EP 2 756 486 B1**
(45) Date of publication and mention of the grant of the patent: **22.08.2018**
(21) Application number: 12766251.8
(22) Date of filing: 12.09.2012
(51) Int. Cl.: H04W 12/02, H04L 29/06, H04L 9/12, H04L 9/32, B60R 16/00, H04W 12/10, G07C 9/00

(54) **CODE HOPPING BASED SYSTEM WITH INCREASED SECURITY**
AUF CODE-HOPPING BASIERENDES SYSTEM MIT ERHÖHTER SICHERHEIT
SYSTÈME BASÉ SUR LES SAUTS DE CODE AVEC SÉCURITÉ AMÉLIORÉE

(30) Priority: 12.09.2011 US 201161533590 P; 11.09.2012 US 201213610377
(43) Date of publication of application: 23.07.2014
(73) Proprietor: Microchip Technology Incorporated, Chandler, AZ 85224-6199 (US)
(72) Inventor: DELPORT, Vivien, Chandler, AZ 85249 (US); STUCKEY, Michael, A., Chandler, AZ 85224 (US); ALEMAN, Enrique, Gilbert, AZ 85234 (US)
(74) Representative: sgb europe
(86) International application number: PCT/US2012/054728
(87) International publication number: WO 2013/039952

(56) References cited:
- WO-A2-00/18060
- US-A1- 2010 286 846
- US-B1- 6 760 439
- William C. Barker: "Recommendation for the Triple Data Encryption Algorithm (TDEA) Block Cipher, Initial Public Draft", , 8 March 2004 (2004-03-08), page complete, XP055012946, Retrieved from the Internet: URL:http://www.immagic.com/eLibrary/TECH/U S_DOC/N040300B.pdf [retrieved on 2011-11-23]

## Description

The present disclosure relates to code hopping systems with increased security.

Keyless entry systems, such as those for garage door openers and keyless car locks, generally employ radio transmitters to send instructions to radio receivers, which then cause the door to be opened or closed (or locked and unlocked). Such systems typically employ a hopping code to prevent "replay" attacks, where an eavesdropper records the transmission and replays it at a later time to open or unlock the door.

A widely used code hopping system is KeeLoq, available from Microchip Technology, Inc. Traditional KeeLoq employs a nonlinear feedback shift register (NLFSR) and encrypts a 32-bit block with a 64-bit encryption key. Newer KeeLoq systems also use other popular encryption systems including those based on XTEA (extended tiny encryption algorithm) or AES-128 (advanced encryption standard). XTEA employs a 64-bit block cipher with a 128-bit key, while AES-128 uses a 128-bit block and a 128-bit key.

Increasing the security of a security system generally requires the use of stronger encryption algorithms, the use of longer encryption keys, multiple encryption keys/calculations, or a combination of these methods. For example, using more than one 64-bit encryption key within the same system means that any brute force type attack scheme needs to calculate more key combinations to attack the security of the system.

International patent application WO 00/18060 discloses a secure data transfer system. US Patent US 6,760,439 discloses a device for implementing a block ciphering process. US Patent application publication US 2010/0286846 discloses a vehicle central lock antitheft method and system. The publication "Recommendation for the triple data encryption algorithm (TDEA) Block Cipher, Initial Public Draft", 8 March 2004, by William C. Barker discloses a block cipher based data encryption algorithm.

All block cipher algorithms, such as the ones used with KeeLoq, typically work on a fixed block sizes (32 bits for traditional KeeLoq encryption or 128 bits for KeeLoq systems using AES-128 encryption). So, for example, to jump or upgrade from one block cipher algorithm (NLFSR) to another (AES-128) requires a significant increase in the number of data bits needed. This can complicate existing RF (radiofrequency) designs, perhaps even require a system redesign or, in the alternative, accept a reduction of the overall system performance.Put another way, to increase security of wireless based access systems, alternative encryption algorithms that typically require more data bits to be transmitted may be used. However, using a larger encryption block requires transmission of more data bits. More bits typically means slower reaction times or an increase in bit rate of the data transmission. Both these require redesign of current RF designs which can be costly and time consuming.

This and other objects can be achieved by the system, transmitter and method as defined in the independent claims. Further enhancements are characterized in the dependent claims.

These, and other, aspects of the disclosure will be better appreciated and understood when considered in conjunction with the following description and the accompanying drawings. It should be understood, however, that the following description, while indicating various embodiments of the disclosure and numerous specific details thereof, is given by way of illustration and not of limitation. Many substitutions, modifications, additions and/or rearrangements may be made within the scope of the disclosure and the disclosure includes all such substitutions, modifications, additions and/or rearrangements.

The present invention may be better understood, and its numerous objects, features, and advantages made apparent to those skilled in the art by referencing the accompanying drawings. The use of the same reference symbols in different drawings indicates similar or identical items.
FIG. 1 is a diagram illustrating an exemplary wireless entry system.
FIG. 2 is a diagram illustrating an exemplary encrypted codeword.
FIG. 3 is a diagram illustrating an exemplary method of calculating a codeword.
FIG. 4 is a flowchart illustrating operation of a wireless access system.

The disclosure and various features and advantageous details thereof are explained more fully with reference to the exemplary, and therefore non-limiting, embodiments illustrated in the accompanying drawings and detailed in the following description. Descriptions of known programming techniques, computer software, hardware, operating platforms and protocols may be omitted so as not to unnecessarily obscure the disclosure in detail. It should be understood, however, that the detailed description and the specific examples, while indicating the preferred embodiments, are given by way of illustration only and not by way of limitation. Various substitutions, modifications, additions and/or rearrangements within the scope of the underlying inventive concept will become apparent to those skilled in the art from this disclosure.

As used herein, the terms "comprises," "comprising," "includes," "including," "has," "having," or any other variation thereof, are intended to cover a non-exclusive inclusion. For example, a process, product, article, or apparatus that comprises a list of elements is not necessarily limited only those elements but may include other elements not expressly listed or inherent to such process, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

Additionally, any examples or illustrations given herein are not to be regarded in any way as restrictions on, limits to, or express definitions of, any term or terms with which they are utilized. Instead these examples or illustrations are to be regarded as being described with respect to one particular embodiment and as illustrative only. Those of ordinary skill in the art will appreciate that any term or terms with which these examples or illustrations are utilized encompass other embodiments as well as implementations and adaptations thereof which may or may not be given therewith or elsewhere in the specification and all such embodiments are intended to be included within the scope of that term or terms. Language designating such non-limiting examples and illustrations includes, but is not limited to: "for example," "for instance," "e.g.," "in one embodiment," and the like.

Any suitable programming language can be used to implement the routines, methods or programs of embodiments of the invention described herein, including C, C++, Java, assembly language, etc. Any particular routine can execute on a single computer processing device or multiple computer processing devices, a single computer processor or multiple computer processors. Data may be stored in a single storage medium or distributed through multiple storage mediums, and may reside in a single database or multiple databases (or other data storage techniques). Although the steps, operations, or computations may be presented in a specific order, this order may be changed in different embodiments. In some embodiments, to the extent multiple steps are shown as sequential in this specification, some combination of such steps in alternative embodiments may be performed at the same time. The sequence of operations described herein can be interrupted, suspended, or otherwise controlled by another process, such as an operating system, kernel, etc. The routines can operate in an operating system environment or as stand-alone routines. Functions, routines, methods, steps and operations described herein can be performed in hardware, software, firmware or any combination thereof.

Embodiments described herein can be implemented in the form of control logic in software or hardware or a combination of both. The control logic may be stored in an information storage medium, such as a computer-readable medium, as a plurality of instructions adapted to direct an information processing device to perform a set of steps disclosed in the various embodiments. Based on the disclosure and teachings provided herein, a person of ordinary skill in the art will appreciate other ways and/or methods to implement the invention.

It is also within the scope of the invention to implement in software programming or code any of the steps, operations, methods, routines or portions thereof described herein, where such software programming or code can be stored in a computer-readable medium and can be operated on by a processor to permit a computer or other device to perform any of the steps, operations, methods, routines or portions thereof described herein. The invention may be implemented by using software programming or code in one or more computing devices, by using application specific integrated circuits (ASIC), programmable logic devices, field programmable gate arrays, and so on.

A "computer-readable medium" may be any medium that can contain, store, communicate, propagate, or transport the program for use by or in connection with the instruction execution system, apparatus, system or device. The computer readable medium can be, by way of example only but not by limitation, an electronic, magnetic, optical, electromagnetic, infrared, or semiconductor system, apparatus, system, device, propagation medium, or computer memory. Such computer-readable medium shall generally be machine readable and include software programming or code that can be human readable (e.g., source code) or machine readable (e.g., object code). Examples of non-transitory computer-readable media can include random access memories, read-only memories, hard drives, data cartridges, magnetic tapes, floppy diskettes, flash memory drives, optical data storage devices, compact-disc read-only memories, and other appropriate computer memories and data storage devices. In an illustrative embodiment, some or all of the software components may reside on a single server computer or on any combination of separate server computers. As one skilled in the art can appreciate, a computer program product implementing an embodiment disclosed herein may comprise one or more non-transitory computer readable media storing computer instructions translatable by one or more processors in a computing environment.

A "processor" includes any hardware system, mechanism or component that processes data, signals or other information. A processor can include a system with a general-purpose central processing unit, multiple processing units, dedicated circuitry for achieving functionality, or other systems.

According to various embodiments, secure signature bits are added into data transmissions, like RF code hopping transmissions, to verify the authenticity and originality of the transmitter or transceiver unit. Use of the secure signature bits in conjunction with a wireless access based code hopping transmission helps to increase the security of the data transmissions without switching to more complex algorithms, and the secondary problems involved with that, such as longer data transmission requirements.

According to various embodiments, a wireless control access code hopping system can use two independent encryption keys, a single symmetrical block cipher encryption, and CRC calculation to produce a secure digital signature while only increasing RF data packet size by less than 10%.

More particularly, to reduce the number of additional data bits needed for improving security, a system according to some embodiments utilizes a 16-bit CRC calculation, but then instead of simply sending the result unencrypted, the encoder obscures the result by using a decryption algorithm, such as a KeeLoq decryption algorithm, and a second 64-bit decryption key, called the Signature Key (SKEY). The intermingling of a 32-bit code hopping or rolling code with the 16-bit CRC value also helps to increase security, for now two 64-bit keys needs to be determined to allow the security system to work.

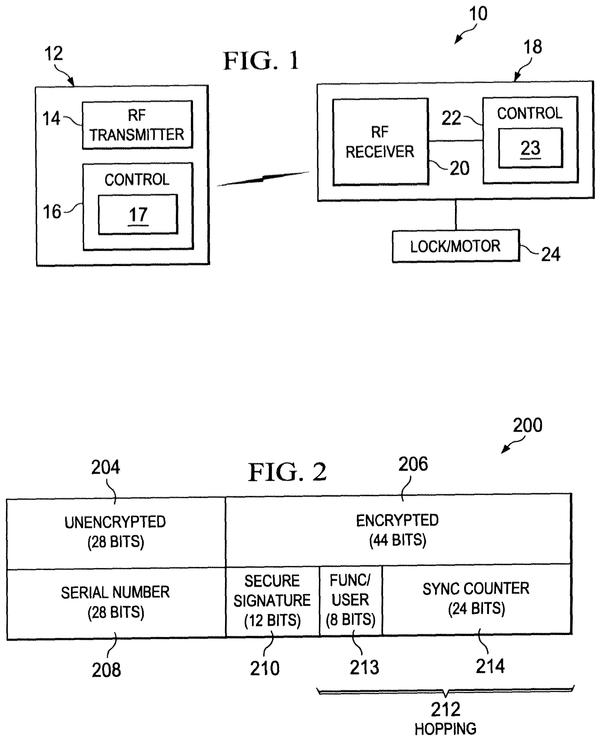

Turning now to the drawings and, with particular attention to FIG. 1, a diagram of an exemplary wireless entry system is shown and generally identified by the reference numeral 10. The wireless entry system 10 implements a wireless access system including a remote transmitter 12 and a base receiver 18.

In the embodiment illustrated, the remote transmitter 12 includes one or more radiofrequency (RF) transmitters or transceivers 14 and one or more controllers 16 implementing an encryption system according to various embodiments. The controller 16 may be implemented as any device or processor including or configured with an encryption control module 17. For example, the controller 16 may be implemented using a Microchip microcontroller running suitable software. Other controllers or processors may be used, however. In operation, the controller 16's encryption control module 17 encrypts control signals that are sent to the base receiver 18. The remote transmitter 12 may further be equipped with one or more user inputs for selecting, for example, one or more locking or unlocking functions.

The base receiver 18 may likewise include a receiver or transceiver 20 and a controller 22. The controller 22 may be implemented as any device or processor including or configured with a decryption control module 23. For example, the controller 22 may be implemented using a Microchip microcontroller running suitable software. Other controllers or processors may be used, however. In operation, the controller 22's decryption module 23 decrypts the signals from the remote transmitter 12.

The base receiver 18 may further be in communication with a device under control 24. Typically, the device is implemented as a lock, such as an automotive lock, or a motor, such as a motor for an automatic garage door. The device under control 24 receives control signals from the base receiver 18 including for example, instructions to open or close (or lock or unlock).

As will be described in greater detail below, embodiments provide a code hopping scheme that integrates a secure signature technique to increase system level security beyond a conventional code hopping system using the same security algorithm. The secure signature may be used in a wireless access system such as garage door openers or other keyless entry systems. The additional secure signature bits provide a way to increase the level security of the overall rolling code hopping code systems without switching to another more complicated encryption algorithm. In addition, the utilization of these additional secure signature data bits may add some level of protection against the unwanted cloning of transmitters by third parties.

FIG. 2 illustrates an exemplary codeword transmission in accordance with some embodiments. In the embodiment illustrated, the codeword transmission 200 includes an unencrypted portion 204 and an encrypted portion 206. In the embodiment illustrated, the codeword 200 is a codeword made up of 72 transmission bits. The fixed code, or unencrypted portion 204, contains a 28-bit device serial number 208. The encrypted portion 206 contains a combination of a 12-bit secure signature code 210, and the 32-bit hopping or rolling code 212, which is made up of a 24-bit synchronization counter 214, and a four bit function code and four bits of user-defined bits 213. In some embodiments, the code word 200 may include any or all of a counter, timer, or pseudo random value, a function value, or user defined bits.

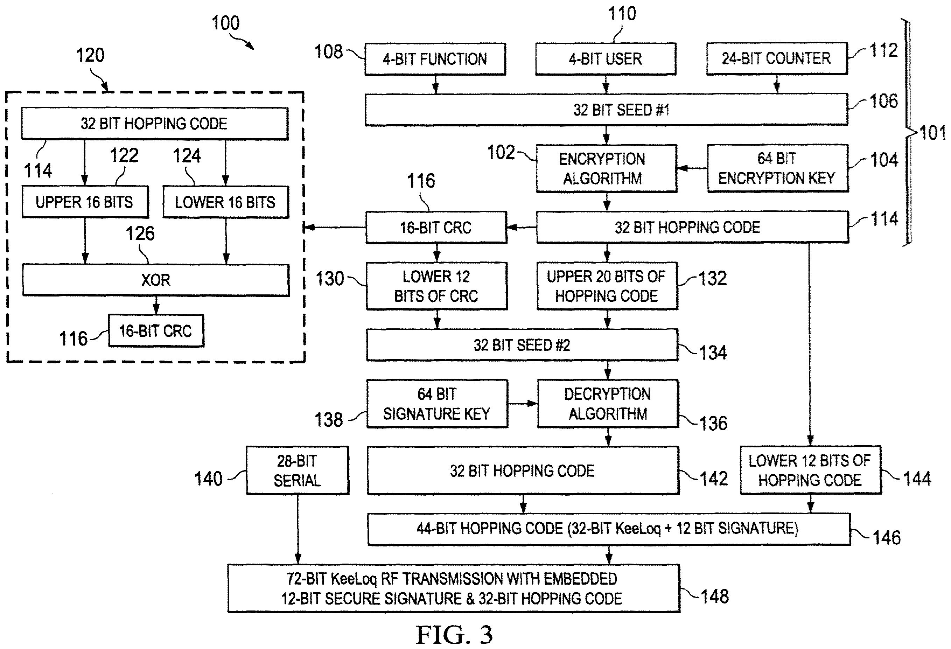

Turning now to FIG. 3, a diagram illustrating exemplary wireless access processing 100 implemented by encryption control module according to embodiments is shown. It is noted that the processing 100 is illustrative of the transmission side; similar corresponding processing would be needed for the receive side.

As will be explained in greater detail below, the processing 100 includes code hopping and application of a signature key. In some embodiments, the code hopping is implemented as a hopping code portion 101 using a traditional 32-bit block cipher 102 that uses a 64-bit Encryption Key (EKEY) 104. In the embodiment illustrated, information contained within these first 32 bits is a seed 106 made up of a 24-bit synchronization counter 112, a 4-bit function code 108, and 4 user defined bits 110.

The 64-bit encryption key 104 (FIG. 3) used for each transmitter 12 (FIG. 1) is unique to that transmitter. The key 104 may be derived from a 64-bit manufacturer's code and the device's unique 28-bit serial number. This 64-bit manufacturer's code should be well protected and when possible changed regularly over time.

In the implementation illustrated, the number of bits for the synchronization counter 112 is 24 bits rather than 16 bits used in traditional KeeLoq systems, to increase the number of counter combinations from 65,536 to 16,777,216. This increase in the number of counter values helps prevent selective transmission capturing techniques. In some embodiments, transmitters may also be assigned a random starting counter value during production programming to better utilize the large counter space.

The 8 bit function/discrimination code may contain 4 bits of button information 108, as well as 4 customer configurable constant bits 110. These bits may be used during post decryption validation checks and also ultimately in identifying what button or function action is required. For example, the function could be opening or closing one or more locks. Particular locks may be assigned to individual buttons on a multi-button controller.

The resulting 32-bit hopping code 114 is then applied to generate a 16-bit CRC 116. For example, as shown at 120, the 32-bit hopping code 114 is separated into upper and lower 16 bit blocks 122, 124, respectively. The upper and lower blocks 122, 124 are then XORed 126 to produce the 16-bit CRC 116.

In some embodiments, the secure signature is derived from the 16-bit CRC 116. In particular, in some embodiments, the lower 12-bits of the 16-bit CRC 116 are used for the secure signature 130. The secure signature 130, along with the upper 20-bits 132 of the Hopping Code 114, are used as a second 32-bit seed 134. A different 64-bit key, called the Secure Signature Key (SKEY) 138, is used instead of the standard 64-bit device encryption key, and is applied to the decryption algorithm 136. The SKEY 138 can be the same for all devices or unique to each device - having them unique will add additional security to each transmitter. The SKEY 138 may be provided in any convenient way, such as by the manufacturer or the customer.

Advantageously, the steps for utilizing the additional 12-bit secure signature bits can be made very specific to particular manufacturer's transmitters. Anyone building transmitters that want to be code compatible with particular systems will need to follow the exact same calculations steps to work. Various algorithmic schemes can be used to generate these additional signature bits 130 ranging from a simple CRC checksum calculation to using more sophisticated secure hashing algorithms, such as SHA-1.

Returning to FIG. 3, the output of the decryption algorithm 136 is a second 32-bit hopping code 142. The 32-bit hopping code 142 (with the embedded secure signature) and the lower 12-bits 144 of the hopping code 114 are then applied to a 44-bit hopping code 146. Finally, the 28 bit serial number 140 is added to the 44-bit hopping code 146 to result in the transmission codeword 148, which includes the serial number 140, the secure signature 130, and the 32-bit hopping code 142.

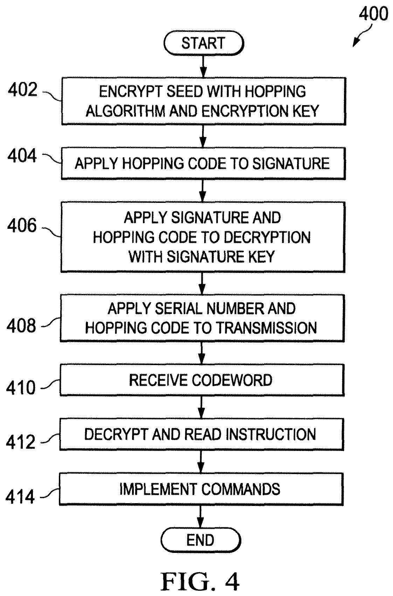

Turning now to FIG. 4, a flowchart 400 illustrating exemplary system operation according to a particular embodiment is shown. Initially, (step 402), a 32-bit seed is provided and encrypted using a hopping code and a first encryption key. As noted, above, the seed may include counter bits and user provided code or command bits corresponding to one or more commands or instructions. The encryption key may be provided, for example, by a manufacturer of the remote controller. The resulting first hopping code may then be provided for use as a cyclical redundancy checksum (CRC) (step 404) to derive a signature. In one embodiment, the secure signature is a 12-bit secure signature derived from a 16-bit CRC.

The secure signature and predetermined bits of the hopping code are then used with a second key (step 406) and decrypted using a decryption algorithm (corresponding to the encryption algorithm) and the second key, referred to as a signature key. The output of the decryption algorithm, predetermined encrypted bits, and a non-encrypted serial number are then applied to a transmission codeword (step 408). In some embodiments, the codeword may further include a predetermined number of bits from the first hopping code.

The resulting codeword is received at the base receiver (step 410), which decrypts the codeword (step 412). The command instructions are read by the base receiver and the base receiver implements the commands (step 414).

As noted above, some implementations of a secure access transmitter may employ a Microchip microcontroller. Other microcontrollers may be used, however. Further, it is noted that the encryption and decryption algorithms can be used in various permutations. Thus, the figure is exemplary only.

## Claims

1. An access system comprising:
a transmitter (12) and a receiver (10) for exchange of secure data wherein the system uses an encryption algorithm and a decryption algorithm corresponding to said encryption algorithm to exchange a secure data packet, wherein the encryption algorithm is a block cipher encryption algorithm, and wherein the transmitter is configured to generate said secure data packet for transmission said secure data packet comprising:
- an unencrypted data packet (204; 140),
- an encrypted data packet (206; 146), wherein the encrypted data packet (206; 146) comprises:
- a first portion (144) of first data (114) encrypted by the encryption algorithm,
- second data (142) decrypted by the decryption algorithm, wherein in order to output said second data the decryption algorithm receives as input a combination of a second portion (132) of said first data (114) and a secure signature (130), wherein the secure signature (130) is derived from said first data (114).

2. A transmitter (12) using an encryption algorithm and a decryption algorithm corresponding to said encryption algorithm to exchange a secure data packet, wherein the encryption algorithm is a block cipher encryption algorithm, said transmitter is configured to generate a secure data packet comprising:
- an unencrypted data packet (204; 140),
- an encrypted data packet (206; 146), wherein the encrypted data packet (206; 146) comprises:
- a first portion (144) of first data (114) encrypted by the encryption algorithm,
- second data (142) decrypted by the decryption algorithm, wherein in order to output said second data the decryption algorithm receives as input a combination of a second portion (132) of said first data (114) and a secure signature (130), wherein the secure signature (130) is derived from said first data (114).

3. An access method, comprising:
producing a secure data packet the producing including generating an unencrypted data packet (204; 140); and
generating an encrypted data packet (206; 146), wherein the encrypted data packet (206; 146) comprises:
- a first portion (144) of first data (114) encrypted by an encryption algorithm,
- second data (142) decrypted by a decryption algorithm,
wherein in order to output said second data the decryption algorithm receives as input a combination of a second portion (132) of said first data (114) and a secure signature (130), wherein the secure signature (130) is derived from said first data (114); and
transmitting the secure data packet by a transmitter to a receiver, wherein the encryption algorithm is a block cipher encryption algorithm and the decryption algorithm corresponds to the encryption algorithm.

4. The access system, transmitter, or method according to one of the preceding claims,
wherein the secure data packet comprises a counter, timer, or pseudo random value, a function value, or user defined bits.

5. The access system, transmitter, or method according to one of the preceding claims, wherein the secure signature is derived from the first data (114) by a CRC algorithm.

6. The access system, transmitter, or method according to one of the preceding claims 1-4, wherein the secure signature is derived from the first data (114) by a hashing algorithm.

7. The access system, transmitter, or method according to one of the preceding claims, wherein the encryption and decryption algorithms use different keys (104, 138).

8. The access system, transmitter, or method according to claim 7, wherein the signature key (138) for the decryption algorithm is unique to each transmitter.

9. The access system, transmitter, or method according to one of the preceding claims, wherein the unencrypted data packet (204) is included into the encrypted data packet (206).

10. The access system or transmitter according to one of the preceding claims, wherein the transmitter (12) is a wireless transmitter.

11. The access system according to claim 10, wherein the receiver (10) is a wireless receiver comprising a locking device (24).

12. The access system or transmitter according to one of the preceding claims, further comprising:
a controller (16) including a computer program product comprising one or more non-transitory machine readable media for implementing the encryption and the decryption algorithm.

13. The access method according to one of the preceding claims 3-9, further comprising decrypting the secure data packet at the receiver (10) and using the decrypted data to control a lock or motor (24).

14. The access method according to one of the preceding claims 3-9 or 13, wherein the coded transmission is performed wirelessly.

## Patentansprüche

1. Zugangssystem, das aufweist:
einen Sender (12) und einen Empfänger (10) zum Austausch von sicheren Daten, wobei das System einen Verschlüsselungsalgorithmus und einen mit dem Verschlüsselungsalgorithmus korrespondierenden Entschlüsselungsalgorithmus verwendet, um ein sicheres Datenpaket auszutauschen, wobei der Verschlüsselungsalgorithmus ein Blockcodeverschlüsselungsalgorithmus ist, und wobei der Sender konfiguriert ist, das sichere Datenpaket zur Übertragung des sicheren Datenpakets zu erzeugen, aufweisend:
- ein unverschlüsseltes Datenpaket (204; 140),
- ein verschlüsseltes Datenpaket (206; 146), wobei das verschlüsselte Datenpaket (206; 146) aufweist:
- einen ersten Teil (144) von ersten durch den Verschlüsselungsalgorithmus verschlüsselten Daten (114),
- zweite durch den Entschlüsselungsalgorithmus entschlüsselte Daten (142), wobei der Entschlüsselungsalgorithmus, um die zweiten Daten auszugeben, als Eingangsgröße eine Kombination aus einem zweiten Teil (132) der ersten Daten (114) und eine sichere Signatur (130) empfängt, wobei die sichere Signatur (130) aus den ersten Daten (114) abgeleitet ist.

2. Sender (12), der einen Verschlüsselungsalgorithmus und einen mit dem Verschlüsselungsalgorithmus korrespondierenden Entschlüsselungsalgorithmus verwendet, um ein sicheres Datenpaket auszutauschen, wobei der Verschlüsselungsalgorithmus ein Blockcodeverschlüsselungsalgorithmus ist, der Sender konfiguriert ist, ein sicheres Datenpaket zu erzeugen, aufweisend:
- ein unverschlüsseltes Datenpaket (204; 140),
- ein verschlüsseltes Datenpaket (206; 146), wobei das verschlüsselte Datenpaket (206; 146) aufweist:
- einen ersten Teil (144) von ersten durch den Verschlüsselungsalgorithmus verschlüsselten Daten (114),
- zweite durch den Entschlüsselungsalgorithmus entschlüsselte Daten (142), wobei der Entschlüsselungsalgorithmus, um die zweiten Daten auszugeben, als Eingangsgröße eine Kombination aus einem zweiten Teil (132) der ersten Daten (114) und eine sichere Signatur (130) empfängt, wobei die sichere Signatur (130) aus den ersten Daten (114) abgeleitet ist.

3. Zugangsverfahren, das aufweist:
Erzeugen eines sicheren Datenpakets, wobei das Erzeugen das Erstellen eines unverschlüsselten Datenpakets (204; 140) einschließt; und
Erstellen eines verschlüsselten Datenpakets (206; 146), wobei das verschlüsselte Datenpaket (206; 146) aufweist:
- einen ersten Teil (144) von ersten durch einen Verschlüsselungsalgorithmus verschlüsselten Daten (114),
- zweite durch einen Entschlüsselungsalgorithmus entschlüsselte Daten (142), wobei der Entschlüsselungsalgorithmus, um die zweiten Daten auszugeben, als Eingangsgröße eine Kombination aus einem zweiten Teil (132) der ersten Daten (114) und eine sichere Signatur (130) empfängt, wobei die sichere Signatur (130) wird aus den ersten Daten (114) abgeleitet wird; und
Übertragen des sicheren Datenpakets durch einen Sender zu einem Empfänger, wobei der Verschlüsselungsalgorithmus ein Blockcodeverschlüsselungsalgorithmus ist und der Entschlüsselungsalgorithmus mit dem Verschlüsselungsalgorithmus korrespondiert.

4. Zugangssystem, Sender, oder Verfahren gemäß einem der vorherigen Ansprüche, wobei das sichere Datenpaket einen Zähler, Timer oder Pseudozufallswert, einen Funktionswert oder anwenderdefinierte Bits aufweist.

5. Zugangssystem, Sender, oder Verfahren gemäß einem der vorherigen Ansprüche, wobei die sichere Signatur durch einen CRC Algorithmus aus den ersten Daten (114) abgeleitet wird.

6. Zugangssystem, Sender, oder Verfahren gemäß einem der vorherigen Ansprüche 1 bis 4, wobei die sichere Signatur durch einen Hashalgorithmus aus den ersten Daten (114) abgeleitet wird.

7. Zugangssystem, Sender, oder Verfahren gemäß einem der vorherigen Ansprüche, wobei die Verschlüsselungs- und Entschlüsselungsalgorithmen verschiedene Schlüssel (104, 138) verwenden.

8. Zugangssystem, Sender, oder Verfahren gemäß Anspruch 7, wobei der Signaturschlüssel (138) für den Entschlüsselungsalgorithmus für jeden Sender eindeutig ist.

9. Zugangssystem, Sender, oder Verfahren gemäß einem der vorherigen Ansprüche, wobei das unverschlüsselte Datenpaket (204) in das verschlüsselte Datenpaket (206) einbezogen ist.

10. Zugangssystem oder Sender gemäß einem der vorherigen Ansprüche, wobei der Sender (12) ein drahtloser Sender ist.

11. Zugangssystem gemäß Anspruch 10, wobei der Empfänger (10) ein drahtloser Empfänger ist, der eine Sperrvorrichtung (24) aufweist.

12. Zugangssystem oder Sender gemäß einem der vorherigen Ansprüche, weiterhin aufweisend:
einen Controller (16) einschließlich eines Computerprogrammprodukts, das eines oder mehrere nichtflüchtige, maschinenlesbare Medien zum Implementieren des Verschlüsselungs- und des Entschlüsselungsalgorithmus aufweist.

13. Zugangsverfahren gemäß einem der vorherigen Ansprüche 3 bis 9, das weiterhin Entschlüsseln des sicheren Datenpakets an dem Empfänger (10) und Verwenden der entschlüsselten Daten zum Steuern eines Schlosses oder Motors (24) aufweist.

14. Zugangsverfahren gemäß einem der vorherigen Ansprüche 3 bis 9 oder 13, wobei die codierte Übertragung drahtlos durchgeführt wird.

## Revendications

1. Système d'accès comprenant :
un émetteur (12) et un récepteur (10) destinés à échanger des données sécurisées, dans lequel le système utilise un algorithme de chiffrement et un algorithme de déchiffrement qui correspond audit algorithme de chiffrement, de façon à échanger un paquet de données sécurisées, dans lequel l'algorithme de chiffrement est un algorithme de chiffrement par bloc ; et
dans lequel l'émetteur est configuré de façon à générer ledit paquet de données sécurisées afin de transmettre ledit paquet de données sécurisées comprenant :
- un paquet de données non chiffrées (204 ; 140) ;
- un paquet de données chiffrées (206 ; 146), dans lequel le paquet de données chiffrées (206 ; 146) comprend :
- une première partie (144) de premières données (114) chiffrées par l'algorithme de chiffrement ;
- des secondes données (142) déchiffrées par l'algorithme de déchiffrement, dans lequel, afin de délivrer en sortie lesdites secondes données, l'algorithme de déchiffrement reçoit en tant qu'entrée, une combinaison d'une seconde partie (132) desdites premières données (114), et une signature sécurisée (130), dans lequel la signature sécurisée (130) est obtenue à partir de desdites premières données (114).

2. Émetteur (12) utilisant un algorithme de chiffrement et un algorithme de déchiffrement qui correspond audit algorithme de chiffrement destinés à échanger un paquet de données sécurisées, dans lequel l'algorithme de chiffrement est un algorithme de chiffrement par bloc, ledit émetteur étant configuré de façon à générer un paquet de données sécurisées, comprenant :
- un paquet de données non chiffrées (204 ; 140) ;
- un paquet de données chiffrées (206 ; 146), dans lequel le paquet de données chiffrées (206 ; 146) comprend :
- une première partie (144) de premières données (114) chiffrées par l'algorithme de chiffrement ;
- des secondes données (142) déchiffrées par l'algorithme de déchiffrement ; dans lequel, afin de délivrer en sortie lesdites secondes données, l'algorithme de déchiffrement reçoit en tant qu'entrée, une combinaison d'une seconde partie (132) desdites premières données (114), et une signature sécurisée (130), dans lequel la signature sécurisée (130) est obtenue à partir de desdites premières données (114).

3. Procédé d'accès comprenant les étapes consistant à :
produire un paquet de données sécurisées, les étapes de production comprenant les étapes consistant à :
- générer un paquet de données non chiffrées (204 ; 140) ; et
- générer un paquet de données chiffrées (206 ; 146), dans lequel le paquet de données chiffrées (206 ; 146) comprend :
- une première partie (144) de premières données (114) chiffrées par un algorithme de chiffrement ;
- des secondes données (142) déchiffrées par l'algorithme de déchiffrement ;
dans lequel, afin de délivrer en sortie lesdites secondes données, l'algorithme de déchiffrement reçoit en tant qu'entrée, une combinaison d'une seconde partie (132) desdites premières données (114), et une signature sécurisée (130), dans lequel la signature sécurisée (130) est obtenue à partir desdites premières données (114). et
émettre le paquet de données sécurisées à l'aide d'un émetteur vers un récepteur, dans lequel l'algorithme de chiffrement est un algorithme de chiffrement par bloc, et l'algorithme de déchiffrement correspond à l'algorithme de chiffrement.

4. Système d'accès, émetteur, ou procédé, selon l'une quelconque des revendications précédentes, dans lequel le paquet de données sécurisées comprend un compteur, un dispositif de synchronisation, ou une valeur pseudo aléatoire, une valeur de fonction, ou des bits définis par un utilisateur.

5. Système d'accès, émetteur, ou procédé, selon l'une quelconque des revendications précédentes, dans lequel la signature sécurisée est obtenue à partir des premières données (114) par un algorithme de contrôle de redondance cyclique (CRC).

6. Système d'accès, émetteur, ou procédé, selon l'une quelconque des revendications 1 à 4, dans lequel la signature sécurisée est obtenue à partir des premières données (114) par un algorithme de hachage.

7. Système d'accès, émetteur, ou procédé, selon l'une quelconque des revendications précédentes, dans lequel les algorithmes de chiffrement et de déchiffrement utilisent des clés différentes (104, 138).

8. Système d'accès, émetteur, ou procédé, selon la revendication 7, dans lequel la clé de signature (138) de l'algorithme de déchiffrement est unique pour chaque émetteur.

9. Système d'accès, émetteur, ou procédé, selon l'une quelconque des revendications précédentes, dans lequel le paquet de données non chiffrées (204) est inclus dans le paquet de données chiffrées (206).

10. Système d'accès ou émetteur, selon l'une quelconque des revendications précédentes, dans lequel l'émetteur (12) est un émetteur sans fil.

11. Système d'accès selon la revendication 10, dans lequel le récepteur (10) est un récepteur sans fil qui comprend un dispositif de verrouillage (24).

12. Système d'accès ou émetteur, selon l'une quelconque des revendications précédentes, comprenant en outre :
un contrôleur (16) qui comprend un produit programme informatique qui comprend un ou plusieurs supports non volatiles qui peuvent être lus par une machine, destinés à mettre en oeuvre les algorithmes de chiffrement et de déchiffrement.

13. Procédé d'accès selon l'une quelconque des revendications précédentes 3 à 9, comprenant en outre les étapes consistant à déchiffrer le paquet de données sécurisées au niveau du récepteur (10), et à utiliser les données déchiffrées de façon à commander un dispositif de verrouillage ou un moteur (24).

14. Procédé d'accès selon l'une quelconque des revendications précédentes 3 à 9 ou 13, dans lequel l'émission codée est exécutée de manière sans fil.
